# EUROPEAN PATENT SPECIFICATION

(11) **EP 4 160 113 B1**
(45) Date of publication and mention of the grant of the patent: **08.11.2023**
(21) Application number: 22191452.6
(22) Date of filing: 22.08.2022
(51) Int. Cl.: F25B 41/35, F16K 27/02, F16K 31/04

(54) **MOTOR-OPERATED VALVE**
MOTORBETRIEBENES VENTIL
VANNE MOTORISÉE

(30) Priority: 30.09.2021 JP 2021161672
(43) Date of publication of application: 05.04.2023
(73) Proprietor: Fujikoki Corporation, Tokyo 158-0082 (JP)
(72) Inventor: MOCHIZUKI, Kenichi, Tokyo, 1580082 (JP); YAZAWA, Masashi, Tokyo, 1580082 (JP)
(74) Representative: Ter Meer Steinmeister & Partner

(56) References cited:
- EP-A1- 3 620 728
- EP-A1- 3 712 472
- WO-A1-2006/064865
- WO-A1-2020/135396
- JP-A- 2020 067 123

## Description

### [Technical Field]

The present invention relates to a motor-operated valve.

### [Background Art]

There has been suggestions that fluorocarbons such as chlorofluorocarbon (CFC) and hydrochlorofluorocarbon (HCFC) and alternatives for chlorofluorocarbons such as hydrofluorocarbon (HFC) that have been utilized as refrigerants in refrigeration cycles may be the cause of ozone layer depletion and global warming. Further, social issues regarding the prevention of global warming and energy problems are generalizing, and there are demands to replace such refrigerants with a refrigerant having a smaller global warming potential (GWP).

Some natural refrigerants having a small GWP have attracted attention as candidates for a new refrigerant, and among them, CO₂ has advantages in that it is safe and has superior handling property. Meanwhile, if CO₂ is used as the refrigerant, the operating pressure must be increased, so that pressure resistance of various components of the refrigeration cycle including a motor-operated valve must be increased. Patent Literature 1 discloses an example of a motor-operated valve that adopts a robust structure and a large-diameter gasket with the aim to enhance the pressure resistance.

WO 2020/135396 A1 discloses a motor-operated valve according to the preamble of claim 1. This document shows a flow control valve, comprising a valve body component, a valve seat component and a valve core component, wherein the valve seat component comprises a sealing ring, a first annular protruding portion and a second annular protruding portion; the valve core component comprises a valve core, and a valve core comprises a lower section portion; when the valve core abuts against the sealing ring, a lower end portion of the lower section portion is located between the first annular protruding portion and a second annular protruding portion; the first annular protruding portion comprises a first inner wall portion located at an outer side of the lower end portion and capable of being engaged with the lower end portion; a second annular protruding portion comprises a first outer portion located at an inner side of the lower end portion and capable of being engaged with the lower end portion.

EP 3 712 472 A1 discloses an electronic expansion valve, comprising: a valve body, wherein the valve body is provided with a first port and a second port, a first cavity is defined in the valve body with the first cavity being in fluid communication with the first port, and the valve body is also provided with a valve port between the second port and the first cavity, wherein the first cavity is selectively in fluid communication with the second port via the valve port; a drive mechanism comprising a rotor and a stator, wherein the rotor has a rotor screw; a valve spindle assembly, wherein the valve spindle assembly is at least partially disclosed in the valve body and is capable of operatively cooperating with the rotor screw for reciprocating motion to adjust the degree of opening of the valve port; and a second cavity isolated and sealed off from the first cavity, wherein a balancing passage is formed in the rotor screw and the valve spindle assembly to enable the second cavity to be in fluid communication with the second port via the balancing passage.

### [Citation List]

### [Patent Literature]

[PTL 1] Japanese Patent Application Laid-Open Publication No. 2003-42326

### [Summary of Invention]

### [Technical Problem]

According to the motor-operated valve of Patent Literature 1, a gasket is arranged between a connecting member to which a can is attached and a valve body, wherein a suspending part formed continuously to a center of a lower surface of the connecting member and passed through the gasket is screwed onto a recessed part of the valve body to apply a contact pressure required to realize sealing to the gasket. According to such structure, the entire lower surface of the connecting member serves as a pressing surface of the gasket, such that in order to ensure a contact pressure required to realize sealing of the gasket, the connecting portion must be tightly engaged to the valve body with a large torque, which may lead to damaging of the suspending part and the screw formed on the recessed part. However, if the diameter of the suspending part is increased so as not to damage the screw, the diameter of the connecting member must be increased in response, causing undesirable increase in size of the motor-operated valve.

Furthermore, in order to ensure a uniform contact pressure throughout the entire gasket having a large diameter, the flatness of the pressing surfaces of the connecting member and the valve body must be ensured throughout a wide area, such that there is a drawback in that the level of difficulty of processing is increased.

An object of the present invention is to provide a motor-operated valve that can be downsized and processed relatively easily.

### [Solution to Problem]

A motor-operated valve according to the present invention is a motor-operated valve that can be attached to a flow passage block, the motor-operated valve comprising the features of claim 1, including
a valve body unit including an upper cylindrical portion and a lower cylindrical portion, in which a valve chamber provided with a valve seat is formed,
a can having a cylindrical shape and coupled to the valve body unit,
a rotor provided in an interior of the can,
a conversion mechanism configured to convert a rotary movement of the rotor to an axial direction movement,
a valve shaft passed through the upper cylindrical portion, that is attached to the conversion mechanism and configured to be displaced in an axial direction to thereby move toward or away from the valve seat,
a first gasket having a sheet-like shape, that is arranged between the upper cylindrical portion and the lower cylindrical portion and that extends in a direction orthogonal to an axis of the motor-operated valve, and
a second gasket having a sheet-like shape, that is arranged between the lower cylindrical portion and the flow passage block and that extends in the direction orthogonal to the axis of the motor-operated valve,
wherein the first gasket and the second gasket are superposed when viewed in an axial direction of the motor-operated valve.

### [Advantageous Effects of Invention]

According to the present invention, a motor-operated valve that can be downsized and processed relatively easily can be provided.

### [Brief Description of Drawings]

[FIG. 1] FIG. 1 is a vertical cross-sectional view illustrating a motor-operated valve according to an embodiment of the current invention.
[FIG. 2] FIG. 2 is a vertical cross-sectional view illustrating a motor-operated valve prior to being attached to a flow passage block with a stator unit removed.

### [Description of Embodiments]

An embodiment of a motor-operated valve according to the present invention will be described below with reference to the drawings. In the present specification, a direction from a rotor toward a valve seat is referred to as downward, and a direction opposite thereto is referred to as upward.

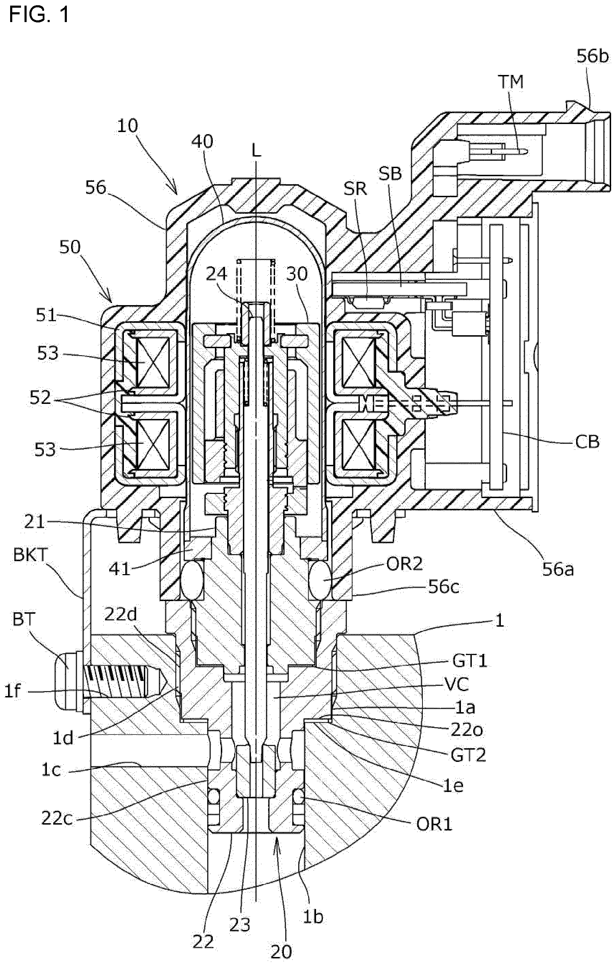

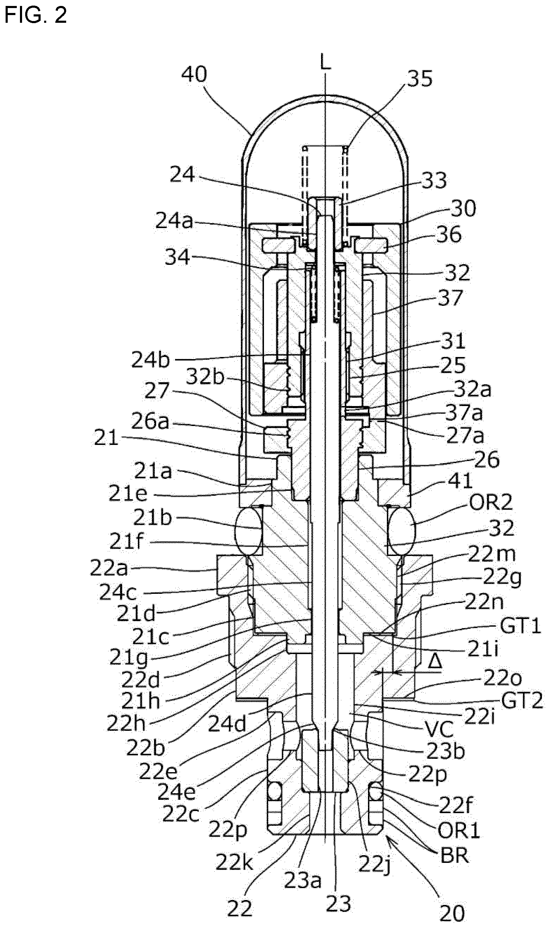

FIG. 1 is a vertical cross-sectional view illustrating a motor-operated valve 10 according to an embodiment of the present invention. FIG. 2 is a vertical cross-sectional view illustrating the motor-operated valve 10 prior to being attached to a flow passage block with a stator unit removed. The motor-operated valve 10 that performs flow control of a CO₂ refrigerant (fluid) in a refrigeration cycle on an automobile etc. includes a valve body unit 20 attached to a flow passage block 1, a can 40 that is attached to the valve body unit 20 and that includes a rotor 30 for driving a valve shaft 24, and a stator 50 that is externally fit to the can 40 and that drives to rotate the rotor 30. An axis of the motor-operated valve 10 is denoted as L.

A pair of bobbins 52 and stator coils 53 and a yoke 51 that surrounds the same are arranged on an outer circumference of a cylindrical part of the can 40, and a resin mold cover 56 that covers the outer circumference thereof is provided, by which the stator 50 is formed. The rotor 30 and the stator 50 constitute a stepping motor.

A hollow casing portion 56a is formed continuously by making a portion of the outer circumference of the resin mold cover 56 protrude outward in the radial direction, and a hollow connector portion 56b is formed on an upper portion of the casing portion 56a. A control board CB is arranged in an interior of the casing portion 56a, and a terminal TM connected to an external power supply is arranged in an interior of the connector portion 56b.

A sensor board SB having a sensor SR attached thereto is arranged to extend from the casing portion 56a toward the can 40. The sensor SR has a function to magnetically detect an angle of the rotor 30 that is arranged adjacent thereto with the can 40 interposed therebetween. The angle signal of the rotor 30 detected by the sensor SR is transmitted to a control circuit of the control board CB.

The control circuit of the control board CB is connected to a stator coil 53 and the terminal TM arranged in the interior of the connector portion 56b, and performs control to adjust the power supplied from the external power supply in response to the angle signal of the rotor 30 sent from the sensor SR and transmit the same to the stator coil 53.

The can 40 is formed of a nonmagnetic metal such as stainless steel, and a top portion thereof has a cylindrical shape with a spherical top. An opened lower end of the can 40 is fixed by welding to an upper end of the valve body unit 20, as described later. A wall thickness of the lower end portion of the can 40 is formed thicker than the wall thickness of the portions other than the lower end portion. Specifically, portions other than a lower end portion 40b of the can 40 is thinned by ironing and the like.

In FIG. 2, the valve shaft 24 having an approximately cylindrical shape is formed of stainless steel or brass, for example, and includes a first shaft portion 24a provided on an upper end, a second shaft portion 24b having a larger diameter than the first shaft portion 24a, a third shaft portion 24c having a smaller diameter than the second shaft portion 24b, a fourth shaft portion 24d having a smaller diameter than the third shaft portion 24c, and a valve portion 24e provided on a lower end thereof, which are formed continuously and coaxially. The valve portion 24e serving as a flow passage adjustment portion has a tapered shape that is reduced in diameter in two steps toward the distal end.

A valve shaft holder 32 having an approximately cylindrical shape is arranged to accommodate the upper end side of the valve shaft 24 within the can 40. An upper end of the valve shaft holder 32 is attached to a push nut 33 to which an upper end of the first shaft portion 24a of the valve shaft 24 is press-fit.

A return spring 35 composed of a compression coil spring is attached along an outer circumference of the push nut 33. The return spring 35 has a function to abut against an inner side surface of the top portion of the can 40 to urge a fixing screw portion 25 of a guide bush 26 described in detail later and a moving screw portion 31 to be returned to the screw-engaged state when screw engagement of the fixing screw portion 25 and the moving screw portion 31 of the valve shaft holder 32 is disengaged.

The rotor 30 arranged with a clearance from the can 40 and the valve shaft holder 32 are coupled via a holding ring 36. More specifically, the holding ring 36 is composed of a metal ring made of brass that has been inserted when forming the rotor 30, wherein by fitting an upper projection of the valve shaft holder 32 to an inner hole portion of the holding ring 36 and caulking the outer circumference of the upper projection to fix the same, the rotor 30, the holding ring 36, and the valve shaft holder 32 are coupled.

An upper stopper body 37 that constitutes one part of a stopper mechanism is fixed to an outer circumference of the valve shaft holder 32. The upper stopper body 37 is composed of a cylindrical resin, and a plate-like upper stopper piece 37a is formed to protrude downward.

The guide bush 26 having a cylindrical shape is arranged between the valve shaft holder 32 and the valve shaft 24. A lower end of the guide bush 26 is press-fit to an inner circumference of an upper cylindrical portion 21 of the valve body unit 20 described later. A lower stopper body 27 that constitutes the other part of the stopper mechanism is fixed to the outer circumference of the guide bush 26. The lower stopper body 27 is composed of a ring-like resin, wherein a lower stopper piece 27a having a plate-like shape, which is engageable with the upper stopper piece 37a described above, is formed to protrude from an upper surface thereof.

The lower stopper body 27 is fixed by injection molding to a spiral groove portion 26a formed to an outer circumference of the guide bush 26, and the upper stopper body 37 is formed by fixing via injection molding to a spiral groove portion 32b formed on an outer circumference of the valve shaft holder 32.

The moving screw portion 31 is formed on an inner side of the valve shaft holder 32 and screw-engaged with the fixing screw portion 25 formed on an outer circumference of the guide bush 26. The rotor 30 and a conversion mechanism for converting a rotary movement of the rotor composed of the moving screw portion 31 and the fixing screw portion 25 into an axial direction movement constitute a valve shaft drive unit that moves the valve shaft 24 in reciprocation movement in the direction of an axis L.

The valve shaft 24 is fit in a manner capable of moving in the up and down direction along the axis L into the valve shaft holder 32 and urged downward by a compression coil spring 34 disposed within the valve shaft holder 32 in a compressed manner. A pressure equalizing hole 32a provided with the aim to balance the pressure inside the valve chamber VC and the can 40 is formed on a side surface of the guide bush 26.

The valve body unit 20 includes the upper cylindrical portion 21 made of metal, a lower cylindrical portion 22 made of metal, and a valve seat member 23 which has a cylindrical shape and made of metal. The upper cylindrical portion 21 and the lower cylindrical portion 22 have relatively thick walls to ensure sufficient pressure resistance.

The upper cylindrical portion 21 includes a first upper outer circumference surface 21a, a second upper outer circumference surface 21b that has a greater diameter than the first upper outer circumference surface 21a, and a third upper outer circumference surface 21c that has a greater diameter than the second upper outer circumference surface 21b. The first upper outer circumference surface 21a is fit to an inner circumference of an annual member 41 to which a lower end of the can 40 is externally fit and welded. An upper male screw 21d is formed to extend from a neighborhood of an intermediate of the third upper outer circumference surface 21c to an upper end thereof, and a lower part of the third upper outer circumference surface 21c is formed as a cylindrical surface.

Further, the upper cylindrical portion 21 includes a first upper inner circumference surface 21e, and a second upper inner circumference surface 21f having a smaller diameter than the first upper inner circumference surface 21e. A reduced diameter portion 21g protruded inwardly in a radial direction is formed in a vicinity of a lower end of the second upper inner circumference surface 21f. The clearance formed around the valve shaft 24 passed through the first upper inner circumference surface 21e and the second upper inner circumference surface 21f becomes smallest at the reduced diameter portion 21g, such that the reduced diameter portion 21g serves as a guide member guiding the valve shaft 24.

Further, the upper cylindrical portion 21 includes a small cylindrical portion 21h that is formed continuously therefrom in a manner protruded downward from a center at the lower end thereof. An inner circumference of a first gasket GT1 described later fits to an outer circumference of the small cylindrical portion 21h. A first upper side stepped surface 21i that is flat and extends radially is formed between the third upper outer circumference surface 21c and the small cylindrical portion 21h.

The lower cylindrical portion 22 includes a first lower outer circumference surface 22a, a second lower outer circumference surface 22b having a smaller diameter than the first lower outer circumference surface 22a, and a third lower outer circumference surface 22c having a smaller diameter than the second lower outer circumference surface 22b. An inner circumference of a second gasket GT2 described later is fit to an outer circumference of the third lower outer circumference surface 22c. A lower male screw 22d is formed to extend from a neighborhood of an intermediate of the second lower outer circumference surface 22b to an upper end thereof, and a lower part of the second lower outer circumference surface 22b is formed as a cylindrical surface.

A circumferential groove 22e is formed near an upper end of the third lower outer circumference surface 22c, and a seal groove 22f is formed in the vicinity of the lower end thereof. An O-ring (annual seal member) OR1 and two backup rings BR made of PTFE, for example, are arranged coaxially within the seal groove 22f. By arranging the backup rings BR on a lower side of the O-ring OR, that is, the side opposite from the valve chamber, abnormal deformation of the O-ring OR is prevented from occurring when the pressure on the valve chamber side is high, such that leakage of the refrigerant will not occur.

A second lower side stepped surface 22o that is flat and extends radially is formed between the second lower outer circumference surface 22b and the third lower outer circumference surface 22c. In the assembled state as illustrated in FIG. 1, a space between a block stepped surface 1e of the flow passage block 1 and the second lower side stepped surface 22o is connected to the valve chamber VC, and the sheet-like second gasket GT2 having an annular shape is arranged so as to be nipped between the block stepped surface 1e and the second lower side stepped surface 22o.

Further, the lower cylindrical portion 22 includes a first lower inner circumference surface 22g, a second lower inner circumference surface 22h having a smaller diameter than the first lower inner circumference surface 22g, a third lower inner circumference surface 22i having a smaller diameter than the second lower inner circumference surface 22h, a fourth lower inner circumference surface 22j having a smaller diameter than the third lower inner circumference surface 22i, and a fifth lower inner circumference surface 22k having a smaller diameter than the fourth lower inner circumference surface 22j.

A lower female screw 22m is formed to extend from a neighborhood of an intermediate of the first lower inner circumference surface 22g to an upper end thereof, and a lower part of the first lower inner circumference surface 22g is formed as a cylindrical surface. The small cylindrical portion 21h of the upper cylindrical portion 21 is fit to the second lower inner circumference surface 22h. A first lower side stepped surface 22n that is flat and extends radially is formed between the first lower inner circumference surface 22g and the second lower inner circumference surface 22h. The space between the first upper side stepped surface 21i and the first lower side stepped surface 22n is connected to the valve chamber VC, and a sheet-like first gasket GT1 having an annular shape is arranged so as to be nipped between the first upper side stepped surface 21i and the first lower side stepped surface 22n.

The second gasket GT2 and the first gasket GT1 are superposed when viewed in the direction of axis L, and a difference between an outer diameter of the first gasket GT1 and an inner diameter of the second gasket GT2 is Δ. The diameter difference Δ should preferably be 0.05 times to 0.5 times the outer diameter of the second gasket GT2.

A space surrounded by the upper cylindrical portion 21 and the lower cylindrical portion 22 and on the inner side of the third lower inner circumference surface 22i constitutes the valve chamber VC. The valve chamber VC and the circumferential groove 22e are communicated via a plurality of communication passages 22p extending radially. The valve seat member 23 that fits to the fourth lower inner circumference surface 22j is arranged so that its lower end is abutted against a stepped portion between the fourth lower inner circumference surface 22j and the fifth lower inner circumference surface 22k. The valve seat member 23 has a penetration passage 23a that forms an orifice at a center thereof. The valve portion 24e of the valve shaft 24 is designed to be seated on or left from a valve seat 23b formed on an upper end of the penetration passage 23a. An upper end of the valve seat member 23 is positioned upward than an axial center of the communication passages 22p and downward than an upper end thereof.

In FIG. 1, the flow passage block 1 includes a first block circular opening 1a, a second block circular opening 1b having a smaller diameter than the first block circular opening 1a and that is connected coaxially thereto, and a flow passage opening 1c that intersects with a side surface of the second block circular opening 1b.

A block female screw 1d is formed to extend from a vicinity of a lower end to an upper end of the first block circular opening 1a, and a lower part of the first block circular opening 1a is formed as a cylindrical surface. The block stepped surface 1e that is flat and extends radially is formed between the first block circular opening 1a and the second block circular opening 1b.

Further, a female screw hole 1f is formed adjacent to the flow passage opening 1c on the flow passage block 1.

### (Assembly of Motor-Operated Valve)

The assembly of the motor-operated valve 10 will be described with reference to the drawings. It is assumed that the components in the interior of the can 40 and the can 40 are assembled in advance. However, the resin mold cover 56 of the stator 50 including the stator coil 53 is not yet assembled to the can 40.

Upon assembly, at first, the valve seat member 23 is fit to the fourth lower inner circumference surface 22j of the lower cylindrical portion 22, and a lower end thereof is abutted against a stepped portion between the fourth lower inner circumference surface 22j and the fifth lower inner circumference surface 22k. Next, the first gasket GT1 is placed on the first lower side stepped surface 22n of the lower cylindrical portion 22.

Further, the upper cylindrical portion 21b having the can 40 assembled thereto is approximated coaxially from the upper direction to the lower cylindrical portion 22, and the valve shaft 24 protruded downward from the upper cylindrical portion 21 is passed through the inside of the third lower inner circumference surface 22i while the third upper outer circumference surface 21c is inserted to the first lower inner circumference surface 22g, and thereafter, the upper male screw 21d is screw-engaged to the lower female screw 22m. Thereafter, by relatively rotating the upper cylindrical portion 21 with respect to the lower cylindrical portion 22 to apply a predetermined torque, an axial force generated by the screwing of the upper male screw 21d and the lower female screw 22m causes the first gasket GT1 to be pressed from both sides by the first upper side stepped surface 21i and the first lower side stepped surface 22n, such that a contact pressure capable of sealing the high-pressure refrigerant is applied to the first gasket GT1. In this state, the valve portion 24e of the valve shaft 24 is fit into the penetration passage 23a of the valve seat member 23. Further, the O-ring OR1 and the backup ring BR are assembled to the seal groove 22f of the lower cylindrical portion 22, by which the motor-operated valve 10 prior to attaching the stator 50 is completed. It is also possible to have the upper cylindrical portion 21 screw-engaged to the lower cylindrical portion 22 in a state where the first gasket GT1 is attached to the first upper side stepped surface 21i. In that state, assembly can be performed in a state where the upper cylindrical portion 21 is arranged downward in the gravity direction than the lower cylindrical portion 22.

Upon assembling the motor-operated valve 10 to the flow passage block 1, the second gasket GT2 is placed on the block stepped surface 1e of the flow passage block 1 and the third lower outer circumference surface 22c of the lower cylindrical portion 22 is passed through the first block circular opening 1a and fit to the second block circular opening 1b.

Thereafter, the second lower outer circumference surface 22b is fit to the first block circular opening 1a, and then, the lower male screw 22d is screw-engaged to the block female screw 1d. Further, by relatively rotating the lower cylindrical portion 22 with respect to the flow passage block 1 to apply a predetermined torque, an axial force generated by the screwing of the lower male screw 22d and the block female screw 1d causes the second gasket GT2 to be pressed from both sides by the second lower side stepped surface 22o and the block stepped surface 1e, such that a contact pressure capable of sealing the high-pressure refrigerant is applied to the second gasket GT2. It is also possible to have the lower cylindrical portion 22 fit to the second block circular opening 1b in a state where the second gasket GT2 is attached to the lower cylindrical portion 22. In that case, assembly can be performed in a state where the lower cylindrical portion 22 is arranged downward in the gravity direction than the block stepped surface 1e.

In that state, an inner circumference surface of the second block circular opening 1b is in contact with the outer side in the radial direction of the O-ring OR1 and the backup rings BR within the seal groove 22f. Thereby, the clearance between the third lower outer circumference surface 22c and the second block circular opening 1b is sealed and the passage of refrigerant can be prevented.

Thereafter, an O-ring OR2 is arranged on the second upper outer circumference surface 21b of the upper cylindrical portion 21. In this state, the O-ring OR2 is positioned between the annual member 41 and the third upper outer circumference surface 21c. In a state where the resin mold cover 56 of the stator 50 including the stator coil 53 and so on is attached so as to cover the can 40, an inner circumference of a cylindrical portion 56c of the resin mold cover 56 comes into contact with the radial outer side of the O-ring OR2. Thereby, the gap between the second upper outer circumference surface 21b and the cylindrical portion 56c can be sealed by the O-ring OR2, and water drops from the exterior can be prevented from entering the interior of the can 40.

Further, the attaching of the motor-operated valve 10 to the flow passage block 1 is completed by fixing a bracket BKT extending from the resin mold cover 56 with a bolt BT screw-engaged to the female screw hole 1f of the flow passage block 1.

### (Operation of Motor-Operated Valve)

The operation of the motor-operated valve 10 according to the present invention will be described. It is assumed that the flow passage opening 1c of the flow passage block 1 is connected to an inlet port of the refrigerant, and the second block circular opening 1b is connected to an outlet port of the refrigerant.

In FIG. 1, a control circuit of the control board CB having received a valve opening signal via the terminal TM from an exterior transmits power controlled based on the angle signal of the rotor 30 detected by the sensor SR to the stator coil 53 of the stator 50 and performs excitation thereof. Since rotating power of the rotor 30 is created by such magnetic force, the rotor 30 and the valve shaft holder 32 are driven to rotate against the guide bush 26 fixed to the valve body unit 20.

In response to such rotary drive, the valve shaft holder 32 is displaced in the direction of axis L by a feed screw mechanism of the fixing screw portion 25 of the guide bush 26 and the moving screw portion 31 of the valve shaft holder 32. In a state where the valve shaft 24 together with the valve shaft holder 32 is displaced upward, the valve portion 24e moves away from the valve seat 23b of the valve seat member 23 to an opening controlled by the control circuit of the control board CB. Thereby, the refrigerant flowing into the valve chamber VC from the flow passage opening 1c passes through between the valve portion 24e and the valve seat 23b by a controlled flow rate, and flows out through the penetration passage 23a and the second block circular opening 1b.

In contrast, in a state where the control circuit of the control board CB receives a valve closing signal from the exterior via the terminal TM, the valve shaft 24 is lowered by an operation opposite that described above, and the valve portion 24e is seated on the valve seat 23b. Thereby, the refrigerant flowing from the flow passage opening 1c into the valve chamber VC will not pass through between the valve portion 24e and the valve seat 23b, and is blocked without flowing out through the penetration passage 23a and the second block circular opening 1b.

In a state where the rotor 30 rotates excessively, the upper stopper piece 37a of the upper stopper body 37 abuts against the lower stopper piece 27a of the lower stopper body 27. By mutual abutment of the stopper pieces 27a and 37a, the lowering of the valve shaft holder 32 is stopped forcibly even if supply of power to the stator 50 is continued.

In this state, by having a high-pressure refrigerant supplied through the flow passage opening 1c, the pressure within the valve chamber VC becomes high, but according to an embodiment of the present invention, the clearance between the flow passage block 1 and the lower cylindrical portion 22 connected to the valve chamber VC is sealed by the second gasket GT2 nipped between the second lower side stepped surface 22o and the block stepped surface 1e (which are referred to as pressing surfaces), such that the high-pressure refrigerant is suppressed from leaking out to the exterior.

Further, the clearance between the upper cylindrical portion 21 and the lower cylindrical portion 22 connected to the valve chamber VC is sealed by the first gasket GT1 nipped between the first upper side stepped surface 21i and the first lower side stepped surface 22n (which are referred to as pressing surfaces), such that the high-pressure refrigerant is suppressed from leaking out to the exterior.

As described, by using the two gaskets GT1 and GT2, the sealing area of one gasket can be reduced, such that a high contact pressure of the gasket can be easily ensured and the sealing property is enhanced. Further, since the area of the first upper side stepped surface 21i and the first lower side stepped surface 22n and the area of the second lower side stepped surface 22o and the block stepped surface 1e are also decreased by reducing the sealing area of the gaskets, the flatness of the surfaces can be ensured easily and the processability is enhanced.

Moreover, since the axial force for applying the contact pressure to the first gasket GT1 is generated by the screwing of the upper male screw 21d and the lower female screw 22m that are positioned radially outward of the first gasket GT1, an even higher contact pressure can be applied. Similarly, since the axial force for applying contact pressure to the second gasket GT2 is generated by the screwing of the lower male screw 22d and the block female screw 1d that are positioned radially outward of the second gasket GT2, an even higher contact pressure can be applied.

Moreover, since the second gasket GT2 and the first gasket GT1 are superposed with a diameter difference Δ when viewed in the axis L direction, i.e., screwing direction, the radial dimension of the motor-operated valve 10 can be downsized.

According to the embodiment described above, the stepped surface that nips the first and second gaskets GT1 and GT2 from both sides are formed flat, but it is also possible to provide a coaxial annular projection to at least one of the stepped surfaces nipping the first and second gaskets GT1 and GT2 from both sides and to press the first and second gaskets GT1 and GT2 thereby.

The present invention is not limited to the embodiments described above. Rather, the scope is defined by the claims.

### [Explanation of References]

- 10: Motor-operated valve
- 20: Valve body unit
- 21: Upper cylindrical portion
- 22: Lower cylindrical portion
- 23: Valve seat member
- 24: Valve shaft
- 25: Fixing screw portion
- 26: Guide bush
- 27: Lower stopper body
- 30: Rotor
- 31: Moving screw portion
- 32: Valve shaft holder
- 33: Push nut
- 34: Compression coil spring
- 35: Return spring
- 36: Holding ring
- 37: Upper stopper body
- 40: Can
- 41: Annular member
- 50: Stator

## Claims

1. A motor-operated valve (10) configured to be attached to a flow passage block (1), the motor-operated valve (10) comprising:
a valve body unit (20) comprising an upper cylindrical portion (21) and a lower cylindrical portion (22), in which a valve chamber (VC) provided with a valve seat (23b) is formed;
a can (40) having a cylindrical shape and coupled to the valve body unit (20);
a rotor (30) provided in an interior of the can (40);
a conversion mechanism configured to convert a rotary movement of the rotor (30) to an axial direction movement;
a valve shaft (24) passed through the upper cylindrical portion (21), that is attached to the conversion mechanism and configured to be displaced in an axial direction to thereby move toward or away from the valve seat (23b);
a first gasket (GT1) having a sheet-like shape that is arranged between the upper cylindrical portion (21) and the lower cylindrical portion (22) and that extends in a direction orthogonal to an axis of the motor-operated valve (10); and
a second gasket (GT2) having a sheet-like shape that is arranged between the lower cylindrical portion (22) and the flow passage block (1) and that extends in a direction orthogonal to the axis of the motor-operated valve (10),
wherein the first gasket (GT1) and the second gasket (GT2) are superposed when viewed in the axial direction of the motor-operated valve (10),
**characterized in that** the second gasket (GT2) is pressed from both sides by a pressing surface of the lower cylindrical portion (22) and a pressing surface of the flow passage block (1) using an axial force generated by screw-engaging and relatively rotating a screw (22d) formed on the lower cylindrical portion (22) and a screw (1d) formed on the flow passage block (1) at an outer side in a radial direction of the second gasket (GT2).

2. The motor-operated valve (10) according to claim 1,
wherein the first gasket (GT1) is pressed from both sides by a pressing surface of the upper cylindrical portion (21) and a pressing surface of the lower cylindrical portion (22) using an axial force generated by screw-engaging and relatively rotating a screw (21d) formed on the upper cylindrical portion (21) and a screw (22m) formed on the lower cylindrical portion (22) at outer side in a radial direction of the first gasket (GT1).

3. The motor-operated valve (10) according to claim 2,
wherein the pressing surface of the upper cylindrical portion (21) and the pressing surface of the lower cylindrical portion (22) are flat.

4. The motor-operated valve (10) according to any one of claims 1 to 3,
wherein the pressing surface of the lower cylindrical portion (22) and the pressing surface of the flow passage block (1) are flat.

5. The motor-operated valve (10) according to any one of claims 1 to 4,
wherein a valve seat member (23) equipped with the valve seat (23b) is attached in a manner fit to the lower cylindrical portion (22).

6. The motor-operated valve (10) according to any one of claims 1 to 5,
wherein an annual seal member (OR1) and a backup ring (BR) are attached between the lower cylindrical portion (22) and the flow passage block (1).

7. The motor-operated valve (10) according to any one of claims 1 to 6,
further comprising a stator (50) attached to an exterior of the can (40).

## Patentansprüche

1. Motorbetriebenes Ventil (10), dazu ausgebildet, an einem Strömungsdurchlassblock (1) angebracht zu werden, welches motorbetriebene Ventil (10) umfasst:
eine Ventilkörpereinheit (20), umfassend einen oberen zylindrischen Teil (21) und einen unteren zylindrischen Teil (22), in welchem eine Ventilkammer (VC) ausgebildet ist, die mit einem Ventilsitz (23b) versehen ist;
eine Dose (40) mit einer zylindrischen Form, welche mit der Ventilkörpereinheit (20) gekoppelt ist;
einen Rotor (30), der im Inneren der Dose vorgesehen ist;
einen Umwandlungsmechanismus, ausgebildet zur Umwandlung einer Rotationsbewegung des Rotors (30) in eine Bewegung in axialer Richtung;
eine Ventilwelle (24), die den oberen zylindrischen Teil (21) durchläuft, welche an dem Umwandlungsmechanismus angebracht ist und dazu ausgebildet ist, in axialer Richtung verschoben zu werden, um sich hierdurch auf den Ventilsitz (23b) zu oder von diesem weg zu bewegen;
eine erste Dichtung (GT1) mit einer plattenförmigen Form, welche zwischen dem oberen zylindrischen Teil (21) und dem unteren zylindrischen Teil (22) angeordnet ist und sich in einer Richtung senkrecht zu einer Achse des motorbetriebenen Ventils (10) erstreckt; und
eine zweite Dichtung (GT2) mit einer plattenförmigen Form, welche zwischen dem oberen zylindrischen Teil (22) und dem Strömungsdurchlassblock (1) angeordnet ist und sich in einer Richtung senkrecht zur Achse des motorbetriebenen Ventils (10) erstreckt,
wobei die erste Dichtung (GT1) und die zweite Dichtung (GT2) aus Sicht der axialen Richtung des motorbetriebenen Ventils (10) übereinanderliegen,
**dadurch gekennzeichnet, dass** die zweite Dichtung (GT2) von beiden Seiten durch eine Druckfläche des unteren zylindrischen Teils (22) und eine Druckfläche des Strömungsdurchlassblocks (1) unter Aufbringung einer axialen Kraft gepresst wird, die durch Gewindeeingriff und relative Drehung einer Schraube (22d), die auf dem unteren zylindrischen Teil (22) ausgebildet ist, und einer Schraube (1d), die auf dem Strömungsdurchlassblock (1) an einer Außenseite in einer radialen Richtung der zweiten Dichtung (GT2) ausgebildet ist, erzeugt wird.

2. Motorbetriebenes Ventil (10) gemäß Anspruch 1,
bei welchem die erste Dichtung (GT1) von beiden Seiten durch eine Druckfläche des oberen zylindrischen Teils (21) und eine Druckfläche des unteren zylindrischen Teils (22) unter Aufbringung einer axialen Kraft gepresst wird, die durch Gewindeeingriff und relative Drehung einer Schraube (21d), die auf dem oberen zylindrischen Teil (21) ausgebildet ist, und einer Schraube (22m), die auf dem unteren zylindrischen Teil (22) an einer Außenseite in radialer Richtung der ersten Dichtung (GT1) ausgebildet ist, erzeugt wird.

3. Motorbetriebenes Ventil (10) gemäß Anspruch 2,
bei welchem die Druckfläche des oberen zylindrischen Teils (21) und die Druckfläche des unteren zylindrischen Teils (22) flach sind.

4. Motorbetriebenes Ventil (10) gemäß einem der Ansprüche 1 bis 3,
bei welchem die Druckfläche des unteren zylindrischen Teils (22) und die Druckfläche des Strömungsdurchlassblocks (1) flach sind.

5. Motorbetriebenes Ventil (10) gemäß einem der Ansprüche 1 bis 4,
bei welchem ein Ventilsitzelement (23), das mit dem Ventilsitz (23b) ausgestattet ist, passend zum unteren zylindrischen Teil (22) angebracht ist.

6. Motorbetriebenes Ventil (10) gemäß einem der Ansprüche 1 bis 5,
bei welchem ein ringförmiges Dichtungselement (OR1) und ein Stützring (BR) zwischen dem unteren zylindrischen Teil (22) und dem Strömungskanalblock (1) angebracht sind.

7. Motorbetriebenes Ventil (10) gemäß einem der Ansprüche 1 bis 6,
ferner umfassend einen Stator (50), der außen an der Dose (40) angeordnet ist.

## Revendications

1. Vanne motorisée (10) configurée pour être fixée à un bloc de passage d'écoulement (1), la vanne motorisée (10) comprenant :
une unité de corps de vanne (20) comprenant une partie cylindrique supérieure (21) et une partie cylindrique inférieure (22), dans laquelle une chambre de vanne (VC) prévue avec un siège de vanne (23b) est formée ;
une boîte (40) ayant une forme cylindrique et couplée à l'unité de corps de vanne (20) ;
un rotor (30) prévu dans un intérieur de la boîte (40) ;
un mécanisme de conversion configuré pour convertir un mouvement de rotation du rotor (30) en un mouvement de direction axiale ;
un arbre de vanne (24) passant par la partie cylindrique supérieure (21), qui est fixé sur le mécanisme de conversion et configuré pour être déplacé dans une direction axiale pour se déplacer ainsi vers ou à l'opposé du siège de vanne (23b) ;
un premier joint (GT1) ayant une forme de feuille qui est agencé entre la partie cylindrique supérieure (21) et la partie cylindrique inférieure (22) et qui s'étend dans une direction orthogonale à un axe de la vanne motorisée (10) ; et
un second joint (GT2) ayant une forme de feuille qui est agencé entre la partie cylindrique inférieure (22) et le bloc de passage d'écoulement (1) et qui s'étend dans une direction orthogonale à l'axe de la vanne motorisée (10),
dans laquelle le premier joint (GT1) et le second joint (GT2) sont superposés lorsqu'ils sont observés dans la direction axiale de la vanne motorisée (10),
**caractérisée en ce que** le second joint (GT2) est comprimé à partir des deux côtés par une surface de pression de la partie cylindrique inférieure (22) et une surface de pression du bloc de passage d'écoulement (1) en utilisant une force axiale générée en mettant en prise une vis et en faisant tourner relativement une vis (22d) formée sur la partie cylindrique inférieure (22) et une vis (1d) formée sur le bloc de passage d'écoulement (1) au niveau d'un côté externe dans une direction radiale du second joint (GT2).

2. Vanne motorisée (10) selon la revendication 1,
dans laquelle le premier joint (GT1) est comprimé à partir des deux côtés par une surface de pression de la partie cylindrique supérieure (21) et une surface de pression de la partie cylindrique inférieure (22) en utilisant une force axiale générée en mettant en prise une vis et en faisant tourner relativement une vis (21d) formée sur la partie cylindrique supérieure (21) et une vis (22m) formée sur la partie cylindrique inférieure (22) au niveau du côté externe dans une direction radiale du premier joint (GT1).

3. Vanne motorisée (10) selon la revendication 2,
dans laquelle la surface de pression de la partie cylindrique supérieure (21) et la surface de pression de la partie cylindrique inférieure (22) sont plates.

4. Vanne motorisée (10) selon l'une quelconque des revendications 1 à 3,
dans laquelle la surface de pression de la partie cylindrique inférieure (22) et la surface de pression du bloc de passage d'écoulement (1) sont plates.

5. Vanne motorisée (10) selon l'une quelconque des revendications 1 à 4,
dans laquelle un élément de siège de vanne (23) équipé avec le siège de vanne (23b) est fixé afin de s'adapter sur la partie cylindrique inférieure (22).

6. Vanne motorisée (10) selon l'une quelconque des revendications 1 à 5,
dans laquelle un élément de joint d'étanchéité annulaire (OR1) et une bague d'appui (BR) sont fixés entre la partie cylindrique inférieure (22) et le bloc de passage d'écoulement (1).

7. Vanne motorisée (10) selon l'une quelconque des revendications 1 à 6, comprenant en outre un stator (50) fixé sur un extérieur de la boîte (40).
